# EUROPEAN PATENT APPLICATION

(11) **EP 0 948 899 A2**
(43) Date of publication of application: **13.10.1999**
(21) Application number: 99302259.9
(22) Date of filing: 23.03.1999
(51) Int. Cl.: A23G 3/00, A23G 3/20

(54) **Confectionery product**

(30) Priority: 30.03.1998 GB 9806804
(71) Applicant: COMPAGNIE GERVAIS-DANONE, F-92302 Levallois Perret (FR)
(72) Inventor: Ison, Renny W., Vicars Cross, Chester CH3 5PJ (GB); Lapierre, Dominique, 71800 La Chapelle-sous-Dun (FR); Lecq, Guy, 77500 Chelles (FR); Delaunay, Yves, 91390 Morsang-sur-Orge (FR)
(74) Representative: Votier, Sidney David

(57) **Abstract**

This invention is a shelled confectionery product, e.g. a chocolate-shelled biscuit, which is contained in a self-supporting receptacle in which it has been formed into shape.

The receptacle, which forms the packaging for the product, is suitably formed from a thermoformable plastics material, e.g. of wall thickness in the range 150 to 1200 µm. A process for making the confectionery product comprises thermoforming a plurality of cavities (10) in a sheet of plastics material (1), charging each of the cavities with a predetermined amount of a flowable edible material such as chocolate (15), applying a cooling plunger (17) to the edible material in each cavity to cause it to flow and fill the space between the plunger and the cavity, allowing the edible material to assume a temperature such that it forms a substantially self-supporting shell (18), withdrawing the cooling plunger (17) therefrom, charging the shell (18) with further consumable material (19), and separating the filled cavities from the sheet of plastics material.

## Description

This invention relates to confectionery products, and is especially concerned with a novel shelled confectionery product and its manufacture.

The invention is especially concerned with chocolate-shelled confectionery products, and will be described with particular reference thereto. However, it is also applicable to other shelled products, e.g. those having shells of other flowable edible materials such as caramel, fat- and water- based cream, and ice cream. It should be mentioned that when we refer herein to "chocolate" we mean not only pure chocolate, made from cacao, but also chocolate-like products and chocolate substitutes.

The manufacture of shelled confectionery products, especially chocolate-shelled biscuits, is lengthy, time-consuming and requires a substantial amount of machinery. Thus, in a typical manufacturing process, a molding plate, typically comprising three or four rows of eight individual molds, is moved along a conveyor. Each mold is filled to overflowing with a flowable chocolate material, following which it is inverted in order that excess chocolate may be discharged. On reverting the mold plate to its upright position, a shell of chocolate is left on the bottom and sides of the mold. Excess chocolate is scraped off the top of the mold plate. Cream or similar edible material may then be charged into the mold, which is vibrated to distribute the cream over the chocolate at the bottom of the mold. A biscuit or similar edible filling is then inserted, and further flowable chocolate material is charged onto the top of the filling, excess chocolate being scraped off, and the mold plate again vibrated to cause the top layer of chocolate to bed down. The mold is cooled, inverted to remove the formed chocolate-shelled biscuit, and the biscuit is wrapped in an individual wrapper. A plurality of wrapped biscuits may be assembled and wrapped together.

This manufacturing method has a number of disadvantages. Firstly, several stages of machinery are required. These include demoulding equipment, which adds expense, is time consuming and may lead to product breakage. Inverting the mold plate and scraping excess chocolate from the top of the mold plate inevitably lead to wastage of chocolate and also contamination of both the product and the mold plate. The variability of the viscosity of the chocolate can lead to products of variable quality and shell thickness. It is not possible to make deep or complex-shaped products or products having an even shell thickness less than about 1.5mm. The process is not microbiologically sterile, and so it is not possible to make sterile products with high water activity fillings (e.g. dairy fillings).

The object of the present invention is the production of a shelled confectionery product, especially a chocolate-shelled confectionery product, which is quicker, cleaner and more efficient than the conventional production method, and leads to a superior product.

The invention is based on the idea of forming the confectionery product in the package in which it is to be transported and stored, and from which it is removed before consumption.

According to the invention, therefore, there is provided a product comprising a shelled confectionery product contained in a self-supporting receptacle in which the confectionery product has been formed into shape.

In one embodiment the shelled confectionery product is formed by depositing in the receptacle material for forming the shell simultaneously with material for forming a filling. This may be achieved by the use of equipment which co-extrudes shell-forming material and filling material, the shell-forming material surrounding the filling material and coming into contact with the receptacle.

In another embodiment the shelled confectionery product is formed by depositing material for forming the shell into the receptacle, forming the material into a shell, and subsequently depositing filling material into the formed shell. In this embodiment the shell-forming material may be formed into shape by means of an appropriately shaped molding plunger.

In a particular embodiment the invention provides a product comprising a self-supporting receptacle and a chocolate-shelled confectionery product contained in said receptacle, wherein said chocolate shell is formed as a molding in said receptacle and is thereafter filled with further consumable material.

Preferably the molded shell is filled with edible material such as a cream and/or biscuit filling, although the filling may be a potable material, e.g. liquor. Preferably also the product is provided with a coating layer of edible material, e.g. caramel or chocolate, on top of the filling.

The self-supporting receptacle, which may for example be flexible or semi-rigid, may be formed of any suitable material, for example paper or metal, e.g. aluminium or tin, foil, but preferably it is formed of plastics material, and most preferably it is formed of a thermoformable plastics material. In a preferred embodiment the product of the invention is manufactured on a continuous production line whereon a continuous sheet of plastics material is formed into a plurality of cavities into each of which is then moulded a shell which is simultaneously or subsequently filled.

Thus, the invention also provides a process for producing a confectionery product which comprises thermoforming a plurality of cavities in a sheet of plastics material, charging each of said cavities with a predetermined amount of a flowable edible material, applying a cooling plunger to the edible material in each cavity to cause it to flow and fill the space between the plunger and the cavity, allowing the edible material to assume a temperature such that it forms a substantially self-supporting shell, withdrawing the cooling plunger therefrom, charging the shell with further consumable material, and separating the filled cavities from the sheet of plastics material.

The invention further provides a process for producing a confectionery product which comprises thermoforming a plurality of cavities in a sheet of plastics material, charging each of the cavities with a predetermined amount of a flowable chocolate mass, applying a cooling plunger to the chocolate mass in each cavity to cause it to flow and fill the space between the plunger and the cavity, allowing the chocolate mass to assume a temperature such that it forms a substantially self-supporting shell, withdrawing the cooling plunger therefrom, charging the shell with further consumable material, and separating the filled cavities from the sheet of plastics material.

The cavities, in which the shell is formed and filled, become the packaging receptacles of the final product.

It is preferred that the chocolate mass charged to the cavities should be tempered, and this helps to give a glossy surface to the product. However, in some cases a tempered chocolate mass is not necessary, as for example when the filling is ice cream.

Suitably the further consumable material is edible material such as a cream and/or biscuit and/or mousse material, and a covering layer or back coating of chocolate or other edible material is formed on the charge of consumable material. The covering coating may be pressed by a pressing member having letters or characters embossed thereon, for example to emboss on the top of the confectionery product a Trade Mark or logo or manufacturer's name. The pressing member may be a further cooling plunger.

In another embodiment of the process of the invention there is provided a process for producing a confectionery product which comprises charging each of a plurality of self-supporting receptacles with a predetermined amount of a flowable edible material, applying a cooling plunger to the edible material in each receptacle to cause it to flow and fill the space between the plunger and the receptacle, allowing the edible material to assume a temperature such that it forms a substantially self-supporting shell, withdrawing the cooling plunger therefrom, and charging the shell with further consumable material.

In this embodiment the pre-formed receptacles are suitably placed in apertures formed in a moving conveyor, whereafter each is charged with a flowable mass of edible material, the mass is formed into a shell by means of a cooling plunger, and the shell is filled and optionally covered as before. The individual filled receptacles may then be removed from the conveyor.

Preferably each filled receptacle is covered by a sheet of thin material, such as a plastics film, an aluminium foil or the like, which is sealed to the top of the cavity around its periphery. Alternatively each receptacle may be integrally formed with a cover or lid, suitably hingedly attached to one wall of the receptacle, such that when the confectionery product has been formed the lid may be hinged over the top of it and sealed to the top of the receptacle. In one embodiment the hinged lid may be embossed with letters or characters in order to function as the pressing member referred to above.

The plunger which contacts the flowable edible mass in each cavity may be such as is described in specification EP-A-589820, and it may be "supercooled", i.e. have a temperature lower than 0°C, if desired. However, the temperature of the plunger need not be so low as is described in EP-A-589820. All that is required is that the plunger should cause the flowable mass to flow up its sides and fill the space between the plunger and each cavity, and thereafter cool the mass sufficiently to cause it to assume a temperature such that it forms a substantially self-supporting shell. Generally speaking, the cooling plunger will be at a temperature in the range -25° to 10°C, and will be in contact with the chocolate mass for from 1 to 15 seconds, for example in order to cool the chocolate to a temperature within the range 0° to 25°C, e.g. 10° to 20°C.

The shell formed by the plunger and cavity will suitably have a thickness in the range 0.5 to 2 mm, most suitably between 0.8 and 1.2 mm.

In some products the shell will have a shell thickness which is uniform. In other products, however, the thickness of the shell may vary, and this may be especially so in relation to the base of the shell. As previously mentioned, the back coating of, e.g., chocolate may be embossed with letters or characters making up a Trade Mark or logo. This may equally be the case with the base of the shell, so that parts of the base will be thicker than other parts. Again, it may be desired for the base to have portions which are relatively thin with respect to other portions of the base. This may be for the purpose of allowing certain parts of the filling, particularly if a light-coloured filling, to be seen. By so selecting the thickness of the relatively thin portions of the shell the filling may be seen in the product as made, or may be seen only when the initial layer or layers of, e.g. chocolate shell have been removed, for example by licking. The precise thickness of the "thin" and thicker zones of the shell necessary to achieve this effect will depend upon the material of the shell and the colours of the fillings, but suitably the "thin" zones will be no more than 0.5 mm thick, e.g. from 0.01 to 0.5 mm, with the surrounding parts of the shell zone 0.2 mm to 0.5 mm thicker in order to achieve the desired contrast. Variations in the thickness of the shell can be achieved by suitably profiling the base of the flexible cavities and/or the face of the cooling plunger. More details of this shell thickness variation embodiment are given in our copending patent application, filed of even date herewith, under reference G22675P.

The invention is illustrated by reference to the accompanying drawings, which are schematic representations of the various stages in the production of a chocolate-coated confectionery product; Figures 1 to 10 illustrating a first embodiment and Figure 11 illustrating a second embodiment. Figure 12 is a perspective view of a product whose shell is of varying thickness.

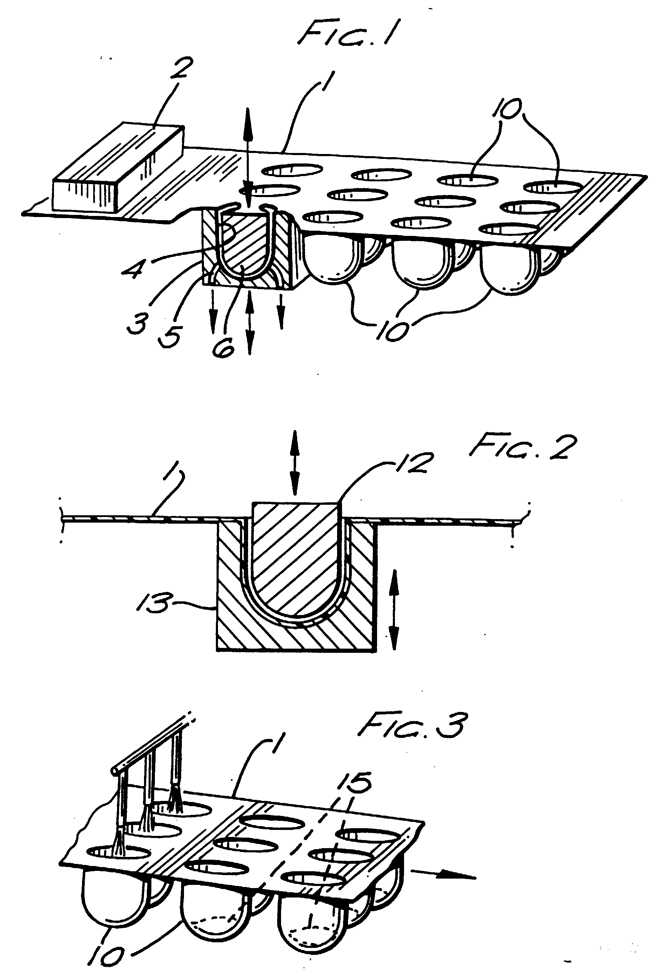

Referring to Figure 1 of the drawings, a continuous sheet of plastics material 1 is conveyed through the forming machine. The plastics material may be any suitable plastics material for use in the food industry, and may be, for example, polyethylene, polypropylene, polyvinyl chloride, polyethylene terephthalate, or any other thermoformable material, which may be transparent. The plastics material 1 is heated by a heater 2 to soften it sufficiently for thermoforming, e.g. vacuum thermoforming. The heated material 1 passes over a mold block 3, containing a series of recesses 4 connected to vacuum passages 5. A series of plungers 6 (one is shown) causes the heated plastics material 1 to be formed into a series of cavities 10, each cavity suitably having a wall thickness in the range 150 - 1200 µm, for example 300 to 600 µm.

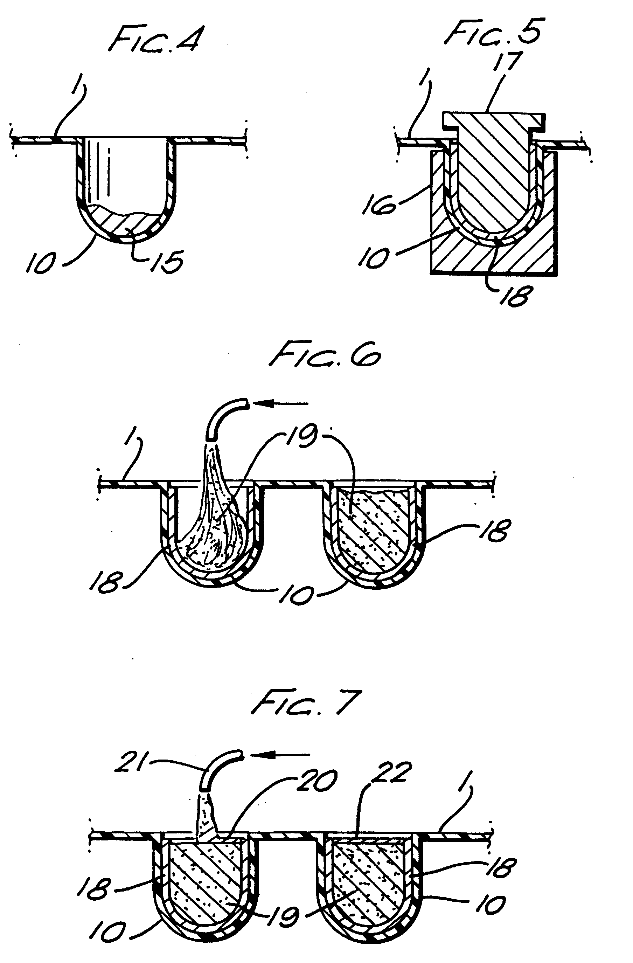

As the cavity-containing sheet 1 passes along the machine the cavities are cooled by means of cooling plungers 12 and cooling molds 13 (see Figure 2). Alternatively the cavities could be cooled by a cooled air flow. The plunger 12 and cooling mold 13 contact the surfaces of each cavity 10, and preferably cool it to a temperature of between 15 and 30°C. Each cooled cavity 10 is then charged with a predetermined weight (e.g. 6 to 9 grams), of tempered chocolate mass 15 (see Figures 3 and 4). Each cavity is then supported by a supporting mold 16, having a shape complementary to that of the cavity 10, and a cooled molding plunger 17 is inserted into the cavity to mold the chocolate mass 15 into a shell 18 (see Figure 5). The plunger 17 is so shaped and dimensioned that it causes the chocolate mass 15 to rise in the cavity 10 to the top of the cavity, the chocolate mass thus filling the space between the outside surface of the plunger 17 and the inside surface of the cavity 10. The plunger 17 may be a supercooled plunger, for example of the type described in EP-A-589820, and it should remain in contact with the chocolate mass 15 for a sufficient time to cool the chocolate mass to a temperature at which it is substantially self-supporting. Thus, for example, the formed chocolate shell 18 may be cooled to a temperature of the order of 10° to 20°C, by contact with the plunger (at a temperature of -25° to 10°C) for from 1 to 15 seconds.

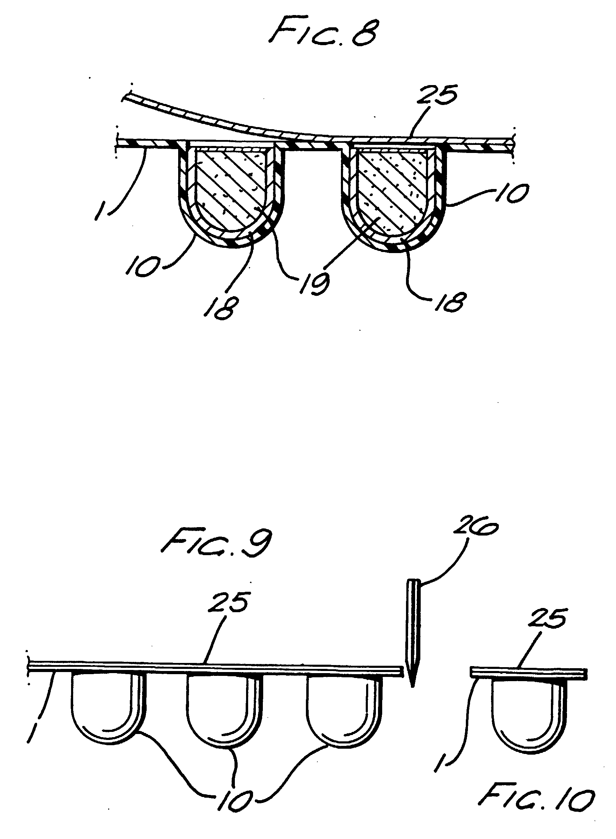

The molding plunger 17 is then lifted clear of the chocolate shell 18, and the plastics sheet 1 continues its movement in the machine. At the stage of the machine shown in Figure 6, the chocolate shell 18 is filled with a centre filling 19, which might be for example a chocolate mousse, cream and/or biscuit material. At the next stage a charge of tempered chocolate 20 is poured from a chocolate depositor 21 onto the filling 19 to form a top coating 22 of chocolate. At this stage (see Figure 7) the plastics sheet 1 may be subjected to vibration to cause the chocolate mass 20 to spread evenly over the filling 19 to form a uniform layer 22. A continuous thin sheet of plastics material or aluminium foil 25 is then fed to the machine and is adhered to the plastics sheet 1 at positions between the cavities 10 (see Figure 8). A cutting knife 26 cuts the sheets 1 and 25 to separate the chocolate-filled cavities 10, either into arrays containing a multiplicity of cavities, or into single chocolate-filled cavities as shown in Figure 10. The product of the machine is thus either a single confectionery product, containing a filled chocolate shell within its plastics package, or a sheet containing a plurality of such filled chocolate shells. A single such product, as shown in Figure 10, may be opened by removing the cover sheet 25. Since chocolate shrinks slightly on cooling, the filled chocolate shell will be a slightly loose fit within the packaging cavity 10 and is thus easily removed therefrom. Ready removal can be assisted by forming the packaging cavity with a tear strip or a line of weakness. If desired, the packaging may be partially removed and the remainder used as a handle.

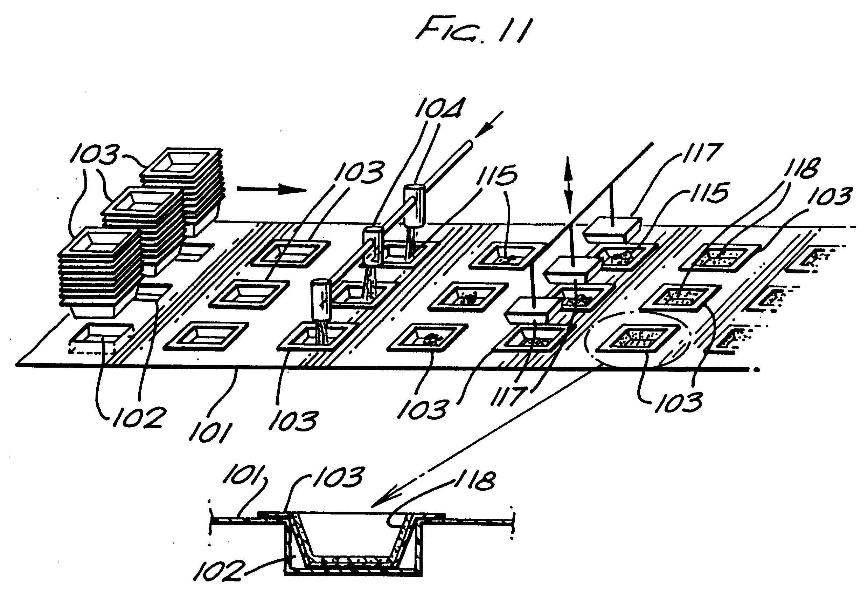

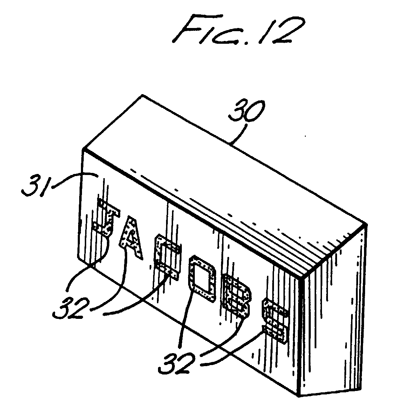

A second embodiment of the invention is illustrated in Figure 11. In this embodiment a continuously moving belt 101 is provided with a plurality of apertures 102. Pre-formed plastics material receptacles 103, made from the same materials as the cavities 10 of the embodiment of Figures 1 to 10, and having a wall thickness in the range 150 - 1200 µm, preferably 300 - 600 µm, are dropped individually into the apertures 102. A predetermined charge of tempered chocolate material 115 is charged to each receptacle 103 via a volumetric charging device 104 fed from a central supply of tempered chocolate. The charge of chocolate 115 is then formed into the shape of a shell 118 by means of a cooled molding plunger 117, the operation of which is as described for molding plunger 17 in the embodiments of Figures 1 to 10. The filling, top coating and covering of the chocolate shell 118 may then proceed in the manner described above.

Following the forming of the molded chocolate product, it may be placed in a cooled room or other cooling device in order to rigidify it inside its packaging, and render it suitable for transporting and sale.

It will be appreciated that many modifications are possible within the general ambit of this invention. For example, the cover sheet 25 may be decorated, for example by embossing its lower surface, and such embossing will be transferred to the top coating 22 of chocolate. The cavities 10 may also be profiled, such that for example the thickness of the chocolate shell 18 may vary. A stick may be inserted into each molded chocolate product, for manual holding, with or without a cover sheet. The stick may itself be of edible material, such as biscuit stick.

A product according to the invention, in which the thickness of the shell varies, is illustrated in Figure 12. This product is a chocolate-shelled biscuit 30 in which the wall 31 has been formed by a profiled plunger to have regions 32 of smaller thickness than the rest of the wall. The regions 32 are thus semi-transparent and through them may be viewed the light-coloured filling, displaying the name "JACOBS".

The invention has been particularly described in relation to confectionery products having a chocolate shell. While the invention offers particular advantages for such products, it is also applicable to products having shells or other edible materials, such as caramel, fat- and water-based creams, and ice cream. When making products from these materials the temperature and time of contact of the cooling plunger with the material will require careful consideration in order that the shell may be properly formed. It is indeed within the scope of the invention to form a product having an outer shell of one material , e.g. chocolate, and one or more inner layers of other consumable material, e.g. ice cream or mousse, or caramel, each of which further inner layers is formed by a successive cooling plunger.

Figures 1 to 11 described above show processes in which a chocolate shell is first formed from a chocolate mass by a moulding plunger, and is then filled with filler. As mentioned above, the chocolate shell and filler may be charged into the receptacle-forming cavity simultaneously. Such may be achieved by co-extruding chocolate material and filler material into the cavity such that the chocolate material is formed into a shell and the filler material fills the shell. Machines suitable for performing such coextrusion are available from Carle & Montanari, Milan, Italy (which utilises a rotary dosing system depositor), Knobel, Felben, Switzerland, and Awema, Zurich, Switzerland (both of which use a piston depositing system). When this procedure is used, the steps illustrated in Figures 3 to 6 are replaced by a single step in which the chocolate depositor shown in Figure 3 is replaced by a chocolate/filler co-extruder.

The present invention thus provides a novel confectionery product which is easy to handle and readily removable from the receptacle in which it is made, packaged, transported and stored, in which it remains out of contact with the atmosphere until opened, and by which it is protected from breakage. This latter is especially important, since the coated product may have a very thin, and therefore potentially fragile, shell. The invention also provides a process for producing such a product which is cheaper, faster, more hygienic and more efficient than that previously used, involves no wastage of material, and utilises substantially less machinery.

## Claims

1. A product comprising a shelled confectionery product contained in a self-supporting receptacle in which the confectionery product has been formed into shape.

2. A product as claimed in claim 1 in which the shelled confectionery product is formed by depositing in the receptacle material for forming the shell simultaneously with material for forming a filling.

3. A product as claimed in claim 1 in which the shelled confectionery product is formed by depositing material for forming the shell into the receptacle, forming the said material into a shell, and subsequently depositing a filling into the formed shell.

4. A product as claimed in any of claims 1 to 3 wherein said receptacle is formed from paper, metal foil or plastics material.

5. A product as claimed in claim 4 wherein said receptacle is formed from a thermoformable plastics material.

6. A product as claimed in any of claims 1 to 5 wherein said receptacle has a wall thickness in the range 150 to 1200 µm.

7. A product as claimed in any of claims 1 to 6 wherein the shell has a thickness in the range 0.5 to 2mm.

8. A product as claimed in any of claims 1 to 7 wherein said shell is made from chocolate.

9. A product as claimed in any of claims 1 to 7 wherein said shell is made from caramel, fat- or water-based cream, or ice cream.

10. A product as claimed in any of claims 2 to 9 in which the filling material is an edible material.

11. A product as claimed in any of claims 1 to 10 comprising a cover sheet sealed to the receptacle.

12. A product as claimed in claim 11 in which the cover sheet is integrally formed with the receptacle.

13. A product as claimed in any of claims 1 to 12 in which the receptacle is provided with a tear strip or line of weakness for easy opening.

14. A product comprising a self-supporting receptacle containing a chocolate-shelled confectionery product which has been formed into shape in the receptacle.

15. A product comprising (i) a self-supporting receptacle and (ii) a chocolate-shelled confectionery product contained in said receptacle, wherein said chocolate shell is formed as a molding in said receptacle and is thereafter filled with further consumable material.

16. A process for producing a confectionery product which comprises thermoforming a plurality of cavities in a sheet of plastics material, charging each of said cavities with a predetermined amount of a flowable edible material, applying a cooling plunger to the edible material in each cavity to cause it to flow and fill the space between the plunger and the cavity, allowing the edible material to assume a temperature such that it forms a substantially self-supporting shell, withdrawing the cooling plunger therefrom, charging the shell with further consumable material, and separating the filled cavities from the sheet of plastics material.

17. A process for producing a confectionery product which comprises thermoforming a plurality of cavities in a sheet of plastics material, charging each of said cavities with a predetermined amount of a flowable chocolate mass, applying a cooling plunger to the chocolate mass in each cavity to cause it to flow and fill the space between the plunger and the cavity, allowing the chocolate mass to assume a temperature such that it forms a substantially self-supporting shell, withdrawing the cooling plunger therefrom, charging the shell with further consumable material, and separating the filled cavities from the sheet of plastics material.

18. A process as claimed in claim 16 or 17 wherein the sheet of plastics material is a sheet of polyethylene, polypropylene, polyvinyl chloride or polyethylene terephthalate.

19. A process as claimed in claim 17 or 18 wherein a cover coating of chocolate is formed on the charge of consumable material.

20. A process as claimed in claim 19 wherein the cover coating is pressed by a pressing member having letters or characters embossed thereon.

21. A process as claimed in any of claims 16 to 20 wherein a second sheet of plastics material forms a packaging cover for the confectionery product.

22. A process as claimed in any of claims 17 to 21 wherein, after molding the chocolate mass, it is cooled to a temperature within the range 0° to 25°C.

23. A process as claimed in claim 22 wherein the chocolate mass is cooled to a temperature of 10° to 20°C.

24. A process for producing a confectionery product which comprises charging each of a plurality of self-supporting receptacles with a predetermined amount of a flowable edible material, applying a cooling plunger to the edible material in each receptacle to cause it to flow and fill the space between the plunger and the receptacle, allowing the edible material to assume a temperature such that it forms a substantially self-supporting shell, withdrawing the cooling plunger therefrom, and charging the shell with further consumable material.

25. A process as claimed in any of claims 16 to 24 wherein, after formation of said substantially self-supporting shell, a further charge or charges of flowable edible material is or are charged into the said shell and are formed, by one or more further cooling plungers, into one or more layers of edible material.

26. A process as claimed in any of claims 16 to 25 wherein the substantially self-supporting shell is of varying thickness.
